(19) Europäisches Patentamt
European Patent Office
Office européen des brevets

(11) **EP 0 937 948 A2**

(12) **EUROPÄISCHE PATENTANMELDUNG**

(43) Veröffentlichungstag:
25.08.1999 Patentblatt 1999/34

(51) Int. Cl.⁶: **F24D 19/10**

(21) Anmeldenummer: 99101010.9

(22) Anmeldetag: 19.01.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.02.1998 DE 19807324

(71) Anmelder:
Viessmann Werke GmbH & Co.
35107 Allendorf (Eder) (DE)

(72) Erfinder: **Hankeln, Martin**
59955 Winterberg (DE)

(74) Vertreter:
**Beetz & Partner
Patentanwälte
Steinsdorfstrasse 10
80538 München (DE)**

(54) **Steuerungsverfahren und Steuerungsvorrichtung für ein Heizsystem**

(57) Die Erfindung betrifft ein Steuerungsverfahren und eine Steuerungsvorrichtung für ein Heizsystem mit einem Kessel für einen Wärmeträger, mindestens einem Temperatursensor zum Erfassen der Temperatur des Wärmeträgers, einem Brenner zum Aufheizen des Wärmeträgers und einer Pumpe zum Umwälzen des Wärmeträgers in einem Heizkreislauf, das die Schritte Umwälzen des Wärmeträgers im Heizkreislauf und Ein- und Ausschalten des Brenners je nach Wärmebedarf, so daß der Wärmeträger im wesentlichen einen Temperaturvorgabewert einhält, umfaßt.

Das gattungsgemäße Stuerungsverfahren wird erfindungsgemäße so fortgebildet, daß die Häufigkeit (PHI), mit der der Brenner eingeschaltet wird, ermittelt wird, die Häufigkeit, mit der der Brenner eingeschaltet wird, mit einem vorgegebenen Referenzwert verglichen wird und der Brenner und die Pumpe für eine vorgegebene Stillstandzeit (HKP) abgeschaltet wird, wenn die Häufigkeit (PHI) über dem vorgegebenen Referenzwert liegt.

Fig. 1

**Beschreibung**

Die Erfindung betrifft ein Steuerungsverfahren und eine Steuerungsvorrichtung für ein Heizsystem mit einem Kessel für einen Wärmeträger, mindestens einem Temperatursensor zum Erfassen der Temperatur des Wärmeträgers, einem Brenner zum Aufheizen des Wärmeträgers und einer Pumpe zum Umwälzen des Wärmeträgers in einem Heizkreislauf, das die Schritte Umwälzen des Wärmeträgers im Heizkreislauf und Ein- und Ausschalten des Brenners je nach Wärmebedarf, so daß der Wärmeträger im wesentlichen einen Temperaturvorgabewert einhält, umfaßt.

In einem konventionellen Heizkreislauf wird an einer Stelle durch einen Brenner der in dem Heizkreislauf befindliche Wärmeträger erhitzt und durch mindestens eine Pumpe in einem oder mehreren Heizkreisen umgewälzt. In Radiatoren gibt der Wärmeträger die Wärme ab, seine Temperatur sinkt. Danach gelangt er zu dem Brenner zurück, wo ihm die abgegebene Wärme wieder zugeführt wird.

Der Brenner wird je nach Wärmebedarf durch einen Regler zu- oder abgeschaltet. Eingangsgröße des Reglers ist die Temperatur des Wärmeträgers, die an einer Stelle im Kreislauf und/oder im Kessel bestimmt wird, und eine Referenztemperatur, die durch den Anwender vorgegeben wird.

Bei einem wärmebedarfsgeführten Regler wird der Wärmeerzeuger oder Brenner abgeschaltet, wenn durch die angeschlossenen Heizkreise keine Wärmeabnahme mehr erfolgt. Die Wärmeabnahme kann durch einen Kesselsensor erfaßt werden, oder sie kann mittelbar durch die Abkühlung des Wärmeträgers bestimmt werden. Ist z.B. die Außentemperatur größer als die geforderte Raumsolltemperatur, die vom Anwender eingestellt wurde, so wird in dem Raum durch einen Heizkörper keine Wärme mehr abgegeben. Als Folge wird der Brenner abgeschaltet bis die Kesseltemperatur einen von der Raumsolltemperatur und Außentemperatur abhängigen Wert wieder unterschreitet. Erst dann kommt es zu einem erneuten Einschalten des Brenners. Ein solcher wärmebedarfsgeführter Regler ist z. B. aus EP 0 260 343 bekannt.

Der Nachteil beim Stand der Technik ist, daß die Komponenten im Heizkreis wie Brenner und Umwälzpumpe immer mindestens im reduzierten Betrieb gehalten werden müssen. Dies kostet Strom und kann außerdem dazu führen, daß einzelne Komponenten wie z. B. die Umwälzpumpe des Heizkreises permanent laufen, obwohl dies aufgrund des Wärmebedarfs nicht notwendig ist. Dadurch werden die Betriebskosten, die sich u. a. aus Stromkosten für die Umwälzpumpe und Brennstoffkosten für den Brenner zusammensetzen, erhöht.

Aufgabe der Erfindung ist es daher, ein Steuerungsverfahren und eine Steuerungsvorrichtung für eine wärmebedarfsgeführte Regelung anzugeben, mit der eine optimale Nutzung bzw. Einsparung der Betriebskosten für den Heizkreis möglich wird.

Die Aufgabe wird erfindungsgemäß gelöst durch ein Verfahren mit dem Merkmalen nach Anspruch 1 und eine Steuerungsvorrichtung nach Anspruch 8. Bevorzugte Ausführungsformen der Erfindung sind Gegenstand der abhängigen Unteransprüche.

Die erfindungsgemäße Lösung der obigen Aufgabe beruht darauf, daß mit Hilfe eines entsprechenden Verfahrens der Wärmeerzeuger (Kessel / Brenner) sowie der Wärmeverteiler (Pumpen) solange außer Betrieb genommen wird, bis von dem angeschlossenen Heizkreis wieder ein Wärmebedarf angefordert wird. Dazu wird aus den bisher vorliegenden Daten über die Einschalt- und Aktivierungszeit der einzelnen Komponenten im Heizkreis der zukünftige Bedarf an Heizenergie extrapoliert. Mit anderen Worten, es wird erfindungsgemäß erfaßt, wie oft und/oder wie lange der Brenner in Betrieb ist, um dem Wärmeträger die entnommene Wärme zurückzugeben. Ist der Temperaturunterschied zwischen der Außen- und der Innentemperatur groß, so ist der Brenner verhältnismäßig lange aktiv, um dem Wärmeträger die entzogene Wärme zurückzugeben. Ist der Temperaturunterschied zwischen der Außen- und der Innentemperatur jedoch gering (und liegen die Schaltwerte der Regelung eng beieinander), so wird der Brenner nicht sehr häufig eingeschaltet und heizt für eine verhältnismäßig kurze Periode den Wärmeträger auf, um dann für längere Zeit wieder abzuschalten. Das heißt, ein Aufheizen des Wärmeträgers ist in diesem Fall eigentlich nicht nötig.

Die Außentemperatur und die Kesseltemperatur kann dabei durch jeweils eigene Sensoren erfaßt werden oder über die Abkühlung des Wärmeträgers, d. h. durch Messen der Temperatur im Kessel bestimmt werden.

Das erfindungsgemäße Steuerungsverfahren für ein Heizsystem mit einem Kessel für einen Wärmeträger, mindestens einem Temperatursensor zum Erfassen der Temperatur des Wärmeträgers, einem Brenner zum Aufheizen des Wärmeträgers und einer Pumpe zum Umwälzen des Wärmeträgers in einem Heizkreislauf, das die Schritte umfaßt Umwälzen der Wärmeträger im Heizkreislauf, Ein- und Ausschalten des Brenners je nach Wärmebedarf, so daß der Wärmeträger im wesentlichen einen Temperaturvorgabewert einhält, ist gekennzeichnet durch die Schritte Ermitteln der Häufigkeit, mit der der Brenner eingeschaltet wird, Vergleichen der Häufigkeit, mit der der Brenner eingeschaltet wird, mit einem vorgegebenen Referenzwert und Abschalten des Brenners und der Pumpe für eine vorgegebene Stillstandzeit, wenn die Häufigkeit über dem vorgegebenen Referenzwert liegt.

In einer Ausführungsform der Erfindung wird zum Ermitteln der Häufigkeit, mit der der Brenner eingeschaltet wird, die Zeitdauer zwischen den einzelnen Einschaltoperationen des Brenners erfaßt.

In einer alternativen Ausführungsform der Erfindung wird zum Ermitteln der Häufigkeit, mit der der Brenner eingeschaltet wird, die Einschaltfrequenz des Brenners erfaßt. Mit anderen Worten, die Anzahl der Einschaltoperationen des Brenners wird über einen vorgegebene Zeitraum gezählt und anschließend durch die Länge des Zeitraums dividiert. Dies ergibt die der Bestimmung der Häufigkeit zugrunde liegende Einschaltfrequenz.

Bei dem erfindungsgemäßen Steuerungsverfahren wird bei der Bestimmung der Stillstandzeit, für die der Brenner und die Pumpe abgeschaltet werden, bevorzugt die Jahreszeit berücksichtigt.

Außerdem kann bei dem Steuerungsverfahren bei der Bestimmung der Stillstandzeit, für die der Brenner und die Pumpe abgeschaltet werden, die Tageszeit berücksichtigt werden.

Um auch örtliche Besonderheiten und individuelle Wünsche des Anwenders berücksichtigen zu können, werden bei einer bevorzugten Ausführungsform des erfindungsgemäßen Steuerungsverfahrenszur Bestimmung der Stillstandzeit, für die der Brenner und die Pumpe abgeschaltet werden, eine Serviceeinstellung berücksichtigt werden.

Ferner kann bei dem Steuerungsverfahren die Stillstandzeit, für die der Brenner und die Pumpe abgeschaltet werden, grundsätzlich kleiner als +/- 7 Stunden gehalten werden.

Um das Steuerungsverfahren nicht für eine bestimmte Zeit für den Anwender unbeeinflußbar zu machen, wird bei einer bevorzugten Ausführungsform die Stillstandzeit, für die das Heizungssystem abgeschaltet ist, auf Null gesetzt, wenn der von dem Anwender eingegebene erste Wert für die Temperatur des Wärmeträgers im Kessel geändert wird.

Die gattungsgemäße Steuerungsvorrichtung ist erfindungsgemäß gekennzeichnet durch eine Detektorvorrichtung zum Ermitteln der Häufigkeit, mit der der Brenner eingeschaltet wird, und eine Vergleichsvorrichtung zum Vergleichen der Häufigkeit, mit der der Brenner eingeschaltet wird, mit einem vorgegebenen Referenzwert und zum Abschalten des Brenners und der Pumpe für eine vorgegebene Stillstandzeit, wenn die Häufigkeit über dem vorgegebenen Referenzwert liegt.

Die Erfindung hat die folgenden Vorteile gegenüber dem Stand der Technik: Einsparung von Energie, geringere Geräuschbelastung im Haus durch laufenden Brenner und Umwälzpumpe. Bei der Ausführungsform mit nur einem Sensor im Kessel kann auf einen Außentemperatursensor sowie einen Raumsensor verzichtet werden.

Weitere Merkmale und Vorteile der Erfindung ergeben sich aus der folgenden Beschreibung von Ausführungsbeispielen der erfindungsgemäßen Lösung der obigen Aufgabe, wobei bezug genommen wird auf die beigefügten Zeichnungen.

Fig. 1 zeigt graphisch die Stillstandzeit des Heizsystems für jeden Monat in Abhängigkeit von der Serviceeinstellung.

Fig. 2 zeigt graphisch die Abhängigkeit der Stillstandzeit von der Belastung und der Jahreszeit bei einer typischen Serviceeinstellung.

Die Einschaltzeit bzw. die Stillstandzeit der Umwälzpumpe wird erfindungsgemäß in Abhängigkeit von der aktuellen Belastung des Heizkreislaufs variiert. Dazu wird erfindungsgemäß bei konstant umgewälztem Wärmeträger im Heizkreislauf, die Häufigkeit des Einschaltens des Brenners bestimmt, die notwendig ist, damit der Wärmeträger auf einer vorgegebenen Temperatur gehalten wird. Dazu wird bei einer Ausführungsform der Erfindung jedes Einschalten des Brenners registriert, wenn die Temperatur der Wärmeträger im Kessel einen vorgegebenen ersten Wert unterschreitet, und entsprechend ein Wert in einem Zähler hochgesetzt. Dieser Zähler wird nach einer vorgegebenen Zeitdauer ausgewertet und daraus die Einschaltfrequenz des Brenners bestimmt. Ist die Einschaltfrequenz größer als ein Referenzwert, so ist die Bedingung erfüllt, daß die Heizanlage für eine längere Dauer abgestellt werden kann.

Bei einer alternativen Ausführungsform der Erfindung wird die Häufigkeit statt aus der Anzahl der Einschaltoperationen des Brenners in einer vorgegebenen Zeit aus der Zeitdauer zwischen den einzelnen Einschaltoperationen des Brenners bestimmt. Steigt diese Zeitdauer zwischen den einzelnen Einschaltoperationen des Brenners über einen vorgegebenen Referenzwert, so ist die Bedingung erfüllt, daß die Heizanlage für eine längere Dauer abgestellt werden kann.

Die Stillstandzeit, für die die Heizanlage bei Erfüllung der obigen Bedingung abgeschaltet wird, wird vorzugsweise in Abhängigkeit von weiteren, im folgenden erläuterten Parametern bestimmt.

Die variable Stillstandzeit der Umwälzpumpe ist abhängig von der aktuellen Belastung vom theoretischen Jahresbelastungsprofil. Insbesondere kann die Umwälzpumpe im Sommerzyklus, wenn nur geringer Wärmebedarf besteht, ganz abgeschaltet werden.

Darüber hinaus ist die variable Stillstandzeit der Umwälzpumpe abhängig von der Tageszeit. Der Verlauf der Stillstandzeit der Umwälzpumpe über den Tag wird vorzugsweise symmetrisch zum 'Tiefpunkt' des Tagesbelastungsprofils um ca. 15 Uhr gelegt.

Die Länge der Stillstandzeit kann neben den obigen Parametern außerdem durch eine Serviceeinstellung an die zu beheizenden Räume und die individuellen Bedürfnisse des Anwenders angepaßt werden. Dabei kommen insbesondere die Isolierung der Räume und die Gewohnheiten der Bewohner als Einflußgrößen für die Serviceeinstellung in Betracht.

Mathematisch läßt sich die Stillstandzeit HKP in einer Ausführungsform der Erfindung durch die Gl. (1) darstellen.

Dabei ist zur Bestimmung der Stillstandzeit HKP die aktuelle Belastung PHI, die Jahreszeit TLP und die Serviceeinstellung SE berücksichtigt.

$$HKP = (((255 - PHI) * (255 - TLP))/255) * SE/7 \quad (1)$$

wobei

HKP  die Stillstandzeit der Umwälzpumpe in Minuten ist,

PHI  die aktuelle Belastung ist, die minimal 0 und maximal 255 betragen kann,

TLP  das theoretische Jahresbelastungsprofil ist, das als Minimalwert 0 und Maximalwert 255 annehmen kann,

SE  die Serviceeinstellung der Sparschaltung ist, wobei der Wertebereich zwischen 0 und 15 liegt.

Mit HKP ist dabei die halbe Stillstandzeit in Minuten angegeben. Die gesamte Stillstandzeit ergibt sich, indem man die halbe Stillstandzeit HKP symmetrisch um ein Tagesminimum der Belastung anordnet. Dieses Tagesminimum liegt erfahrungsgemäß bei 15 Uhr.

Man beachte, daß in der mathematischen Darstellung nach Gl. (1) bei der Berechnung das Komplement der aktuellen Belastung PHI bzw. des theoretischen Jahresbelastungsprofils TLP gebildet werden muß. Daher ergibt sich in der Gl. (1) eine Subtraktion der jeweiligen Werte von einem theoretischen Maximum 255. Dies ist aber nur eine mögliche Ausführungsform der Erfindung, für den Fachmann sind Abwandlungen der mathematischen Zusammenhänge mit den obigen Eingangsgrößen denkbar, ohne daß der Rahmen der vorliegenden Erfindung verlassen wird.

Der Zusammenhang zwischen Stillstandzeit HKP und Serviceeinstellung SE der erfindungsgemäßen Sparschaltung mit dem Wertebereich zwischen 0 und 15 läßt sich dabei in tabellarischer Form wie folgt darstellen:

Tabelle 1

| Serviceeinstellung SE | Stillstandzeit |
|---|---|
| 0 | keine Stillstandzeit HKP |
| 1 | kurze Stillstandzeit HKP |
| ... | ... |
| 15 | lange Stillstandzeit HKP |

Bei einer Serviceeinstellung SE 0 liegt also der Fall vor, daß im eigentlichen Sinne keine Sparschaltung aktiviert ist, sondern das Heizsystem unmittelbar und ohne Verzögerung auf die momentane Anforderungen reagiert: es gibt keine Stillstandzeit HKP. Diese Einstellung kann besonders im Winter erforderlich werden.

Der Ausschaltzeitpunkt und die Ausschaltdauer werden durch den aktuellen Belastungszustand, das Jahresbelastungsprofil TLP sowie die aktuelle Uhrzeit bestimmt und vorzugsweise symmetrisch zu 15 Uhr gelegt.

Aufgrund des obigen Zusammenhangs nach Gl. (1) ergeben sich für den wärmebedarfsgeführten Betrieb bei der erfindungsgemäßen Regelung folgende Merkmale:

Die Umwälzpumpe wird bei geringer Belastung PHI ausgeschaltet. Die Stillstandzeit HKP wird wie aus Gl. (1) ersichtlich in Abhängigkeit von den Parametern fest vorgegeben. Während der Stillstandzeit HKP erfolgt keine exakte Belastungsberechnung. Die Sparschaltung ist während der Aufheizphase nicht aktiv. Die Umwälzpumpe kann durch eine Erhöhung des Raumsollwertes wieder eingeschaltet werden. Die Sparschaltung kann am Folgetag wieder aktiviert werden. Über die Serviceeinstellung SE kann die Stillstandzeit HKP der Umwälzpumpe beeinflußt werden. Erfolgt während der Stillstandzeit HKP der Umwälzpumpe ein Wechsel in den reduzierten Betrieb, so bleibt die Umwälzpumpe solange ausgeschaltet, bis die berechnete Stillstandzeit HKP abgelaufen ist. Erfolgt während der Stillstandzeit HKP der Umwälzpumpe ein Wechsel in den Normalbetrieb, d. h. in den Heizbetrieb, so wird die Umwälzpumpe eingeschaltet, auch wenn die berechnete Stillstandzeit HKP noch nicht abgelaufen ist.

Nach Berechnung der Stillstandzeit HKP wird geprüft, ob die Umwälzpumpe aufgrund der berechneten Stillstandzeit bis zur Zeitdifferenz bis 15 Uhr abgeschaltet werden kann. Die Verdopplung der berechneten Zeit ergibt die gesamte tatsächlich eingehaltene Ruhezeit der Umwälzpumpe. Bei einer positiven Raumkorrektur wird die Umwälzpumpe zwangsweise eingeschaltet, d. h. eine positive Raumkorrektur stellt eine Abbruchbedingung in dem erfindungsgemäßen System dar.

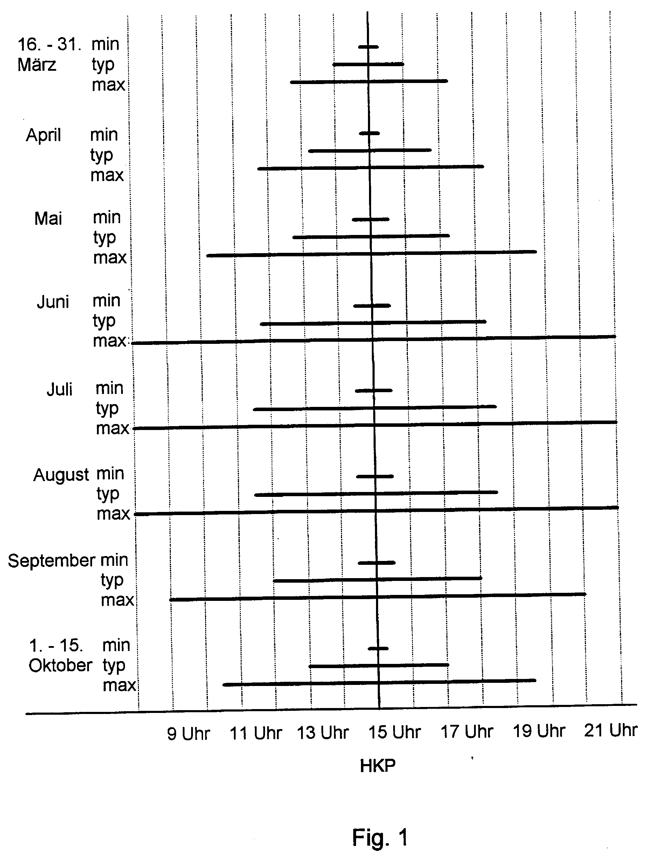

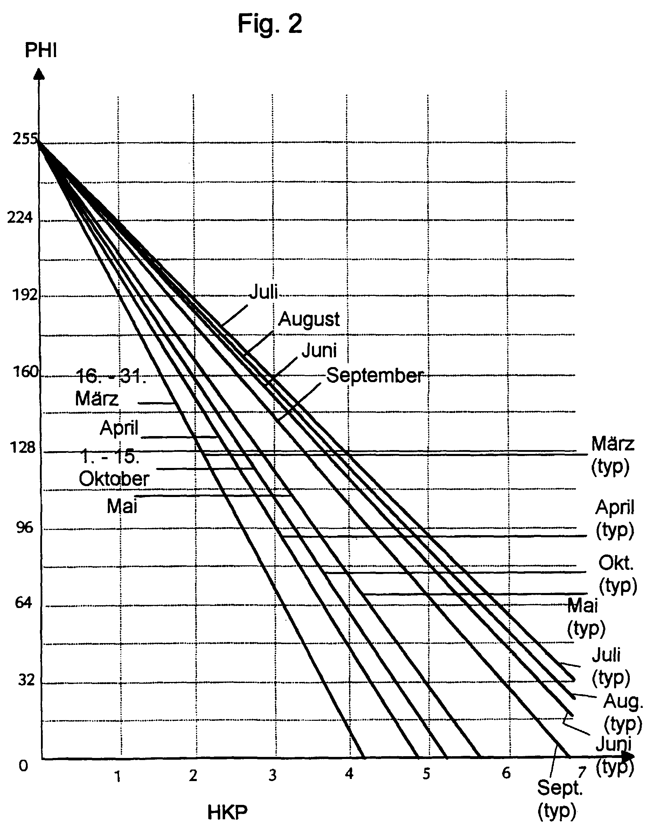

Die berechneten Werte für die Stillstandzeit HKP sind in Fig. 1 und Fig. 2 dargestellt. Dabei zeigt Fig. 1 die Stillstandzeit HKP des Heizsystems im Tagesverlauf, aufgetragen für jeden Monat im Sommerhalbjahr zwischen Mitte März und Mitte Oktober. Im Winterhalbjahr ist dagegen bei dem gezeigten Beispiel eine Stillstandzeit HKP nicht vorgesehen, d. h. die Stillstandzeit HKP ist 0.

Parameter der aufgetragenen Stillstandzeiten HKP ist die Serviceeinstellung SE, die mit "min", "typ." und "max" bezeichnet ist. Die Serviceeinstellung SE der Sparschaltung hat als Minimalwert 1, als typischen Wert 7 und als Maximalwert 15.

Die Stillstandzeit HKP der Umwälzpumpe bei aktiver Sparschaltung ist symmetrisch um 15 Uhr gelegt, dem Tagesminimum der Belastung des Heizsystems.

Wie aus Fig. 1 ersichtlich ist die Tages-Stillstandzeit im März und Oktober relativ kurz, da noch ein hoher Heizbedarf in diesen Monaten besteht. Dagegen ist die Stillstandzeit des Heizsystems im Hochsommer in den Monaten Juni und Juli sehr groß und kann sich über maximal +/- 7 Stunden am Tag erstrecken, wenn als Serviceeinstellung "max" gewählt wird. Wie bereits erwähnt hängt diese Serviceeinstellung u. a. von den individuellen Bedürfnissen des Anwenders und von z. B. der Isolierung der zu beheizenden Räume ab. Ferner sind die allgemeinen klimatischen Bedingungen am Aufstellungsort des Heizsystems für die Wahl der Serviceeinstellung von Bedeutung.

In Fig. 2 ist die Stillstandzeit HKP der Umwälzpumpe bei aktiver Sparschaltung in Abhängigkeit von der Belastung PHI gezeigt. Die Serviceeinstellung SE ist nicht 0, sondern es wurde bei der Berechnung der gezeigten Abhängigkeit eine Serviceeinstellung SE mit dem Wert 7 zugrunde gelegt. Parameter ist wie in der Darstellung nach Fig. 1 wiederum die Jahreszeit TLP.

Bei unterschiedlichen Lastverhältnissen PHI, die typischerweise durch die Jahreszeit gegeben sind, ergeben sich entsprechend lange Stillstandzeiten HKP. Die Belastung PHI ist auf der Ordinate in Fig. 2 aufgetragen, die Stillstandzeit HKP ist auf der Abszisse aufgetragen. Wie ersichtlich ergibt sich eine lineare Abhängigkeit zwischen Stillstandzeit HKP und Belastung PHI. Die Steigung wird bestimmt durch das Jahresbelastungsprofil TLP und ist in der gezeigten Darstellung groß bei hoher Jahresbelastung TLP, d. h. im März und Oktober, und ist kleiner bei geringer Jahresbelastung TLP, d. h. zwischen Juni und September.

Während der Stillstandzeit HKP erfolgt keine Belastungsberechnung, die Erfassung der Häufigkeit PHI des Einschaltens des Brenners ist durchführbar und wird daher "ausgeblendet". Die Heizung kann für diesen Zeitraum nicht auf Änderungen reagieren. Damit der Anwender jedoch eine Möglichkeit hat, die Heizung zu reaktivieren, wird von der erfindungsgemäßen Regelung in einer bevorzugten Ausführungsform auch im Stand-by-Betrieb permanent die vom Anwender eingestellte Raumsolltemperatur abgefragt. Bei einer Erhöhung dieses Sollwertes wird die Sparschaltung aufgehoben, d. h. wird die Regelung reaktiviert.

**Patentansprüche**

1. Steuerungsverfahren für ein Heizsystem mit einem Kessel für einen Wärmeträger, mindestens einem Temperatursensor zum Erfassen der Temperatur des Wärmeträgers, einem Brenner zum Aufheizen des Wärmeträgers und einer Pumpe zum Umwälzen des Wärmeträgers in einem Heizkreislauf, das die Schritte umfaßt:

   Umwälzen des Wärmeträgers im Heizkreislauf, Ein- und Ausschalten des Brenners je nach Wärmebedarf, so daß der Wärmeträger im wesentlichen einen Temperaturvorgabewert einhält, gekennzeichnet durch die Schritte:

   Ermitteln der Häufigkeit (PHI), mit der der Brenner eingeschaltet wird, Vergleichen der Häufigkeit, mit der der Brenner eingeschaltet wird, mit einem vorgegebenen Referenzwert, Abschalten des Brenners und der Pumpe, wenn die Häufigkeit (PHI) über dem vorgegebenen Referenzwert liegt, und Einschalten des Brenners und der Pumpe nach einer vorgegebenen Stillstandzeit (HKP).

2. Steuerungsverfahren nach Anspruch 1, dadurch gekennzeichnet, daß zum Ermitteln der Häufigkeit (PHI), mit der der Brenner eingeschaltet wird, die Zeitdauer zwischen den einzelnen Einschaltoperationen des Brenners erfaßt wird.

3. Steuerungsverfahren nach Anspruch 1, dadurch gekennzeichnet, daß zum Ermitteln der Häufigkeit (PHI), mit der der Brenner eingeschaltet wird, die Einschaltfrequenz erfaßt wird.

4. Steuerungsverfahren nach einem der vorangehenden Ansprüche, dadurch gekennzeichnet, daß die Stillstandzeit (HKP), für die der Brenner und die Pumpe abgeschaltet werden, abhängig von der Jahreszeit (TLP) ist.

5. Steuerungsverfahren nach einem der vorangehenden Ansprüche, dadurch gekennzeichnet, daß die Stillstandzeit (HKP), für die der Brenner und die Pumpe abgeschaltet werden, abhängig von der Tageszeit ist.

6. Steuerungsverfahren nach einem der vorangehenden Ansprüche, dadurch gekennzeichnet, daß die Stillstandzeit (HKP), für die der Brenner und die Pumpe abgeschaltet werden, abhängig von einer Serviceeinstellung (SE) ist.

7. Steuerungsverfahren nach einem der vorangehenden Ansprüche, dadurch gekennzeichnet, daß die Stillstandzeit (HKP), für die der Brenner und die Pumpe abgeschaltet werden, nicht größer als +/-7 Stunden ist.

8. Steuerungsverfahren nach einem der vorangehenden Ansprüche, dadurch gekennzeichnet, daß die Stillstandzeit (HKP), für die das Heizungssystem abgeschaltet ist, auf Null gesetzt wird, wenn der von dem Anwender eingegebene Temperaturvorgabewert des Warmeträgers im Kessel erhöht wird.

9. Steuerungsvorrichtung für ein Heizsystem, das umfaßt: einen Kessel für einen Wärmeträger, der einen Temperatursensor aufweist,

   einen Brenner zum Aufheizen des Wärmeträgers und eine Pumpe zum Umwälzen des Wärmeträgers in einem Heizkreislauf, gekennzeichnet durch eine Detektorvorrichtung zum Ermitteln der Häufigkeit (PHI), mit der der Brenner eingeschaltet wird, und eine Vergleichsvorrichtung zum Vergleichen der Häufigkeit (PHI), mit der der Brenner eingeschaltet wird, mit einem vorgegebenen Referenzwert und zum Abschalten des Brenners und der Pumpe, wenn die Häufigkeit (PHI) über dem vorgegebenen Referenzwert liegt, und zum Einschalten des Brenners und der Pumpe nach einer vorgegebenen Stillstandzeit (HKP).

Fig. 1

## Fig. 2